(19) Europäisches Patentamt
European Patent Office
Office européen des brevets

(11) EP 1 981 283 A1

(12) **DEMANDE DE BREVET EUROPEEN**

(43) Date de publication:
**15.10.2008 Bulletin 2008/42**

(51) Int Cl.:
***H04N 7/30*** *(2006.01)*

(21) Numéro de dépôt: **08103497.7**

(22) Date de dépôt: **11.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **11.04.2007 FR 0702627**

(71) Demandeur: **Sagem Communications**
**75015 Paris (FR)**

(72) Inventeur: **Deschamps, Lionel**
**78150 LE CHESNAY (FR)**

(74) Mandataire: **Cabinet Plasseraud**
**52 rue de la Victoire**
**75440 Paris Cedex 09 (FR)**

(54) **Procédé et dispositif de traitement d'image JPEG en decompression partielle**

(57) L'invention concerne un procédé et un dispositif de traitement d'image JPEG en décompression partielle.

On décompresse (A) partiellement le fichier JPEG d'origine ($JP_o$) sur une suite de blocs de pixels ([$\Delta JP_o i$]) et on conserve la partie non décompressée ($[\overline{\Delta JP_o i}]$). On engendre (B) un fichier JPEG auxiliaire ([$C\Delta JP_{auxi}$]) compatible avec la partie non décompressée ($[\overline{\Delta JP_o i}]$) et on substitue (C) à la suite de bits décompressée ([$\Delta JP_o i$]) la suite de blocs de pixels auxiliaire [$C\Delta JP_{auxi}$] par concaténation pour obtenir un fichier JPEG traité ($JP_T$).

Application à la transmission de télécopies, retouche d'images.

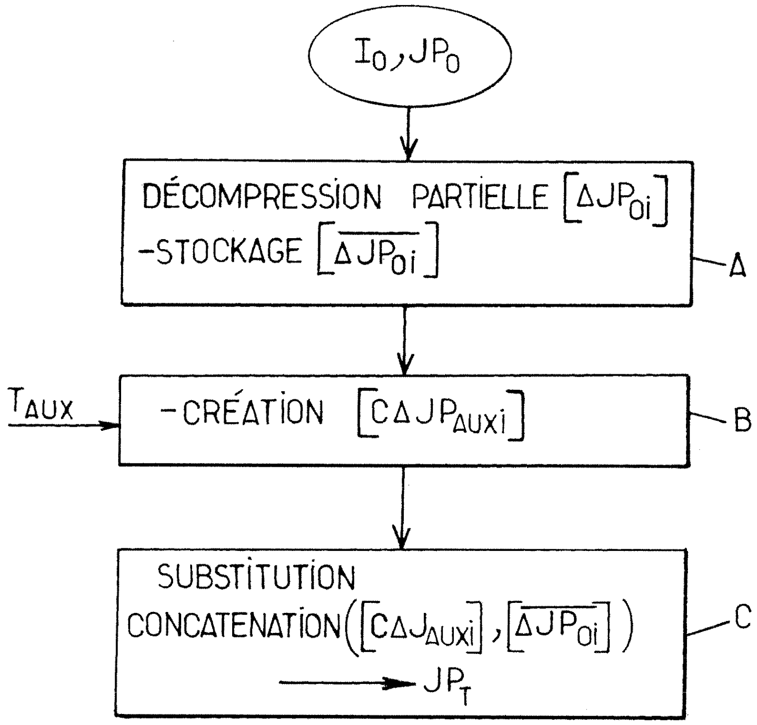


FIG 2

EP 1 981 283 A1

## Description

Le processus de compression d'image numérique JPEG est un processus reconnu et performant de compression d'images numériques pour les formats graphiques, tels que les photographies, les fac-similés couleurs par exemple.

On rappelle, en particulier, que le sigle JPEG n'est autre que l'acronyme de Joint Photographic Expert Group, lequel a donné son nom à la norme de compression d'images numériques JPEG ; ISO/CEI 10815-1 ou UIT-T Recommandation T.81.

Le processus de compression JPEG met en oeuvre une méthode de compression à partir d'une transformée en cosinus discrète, DCT, et spécifie uniquement la transformation d'une image brute en suite de bits, sans spécifier le mode ou format de stockage des informations, leur auteur ou autre donnée bibliographique.

L'un des intérêts du processus JPEG, est de présenter un taux de compression réglable.

Toutefois, un compromis doit cependant être observé entre le taux de compression et la qualité de l'image obtenue. Ainsi, le taux de compression ne doit pas être trop important, ou l'opération de compression ne doit pas être itérée de manière importante au risque de réduire considérablement la qualité de l'image.

Par principe, le processus JPEG consiste à découper une image numérique en blocs de pixels, 8 lignes et 8 colonnes de blocs de pixels, ainsi que représenté en figure 1a, et à effectuer la compression de chacun de ces blocs.

Un diagramme du processus opératoire mis en oeuvre par la compression JEPG est représenté en figure 1b. Pour une description plus détaillée de ce processus, on pourra utilement se reporter au texte de la Recommandation T.81 précitée.

Le processus JPEG est notamment utilisé pour transmettre des pages de télécopie en couleur ou des images en couleur par courrier électronique ou en réseau.

Le fichier d'image JPEG obtenu est représenté en figure 1c et comporte un en-tête suivi de champs de bits codés de longueur variable et représentant chacun un bloc de pixels.

L'un des problèmes posés par la mise en oeuvre du processus JPEG concerne l'accès à tout ou partie de l'image par l'intermédiaire du fichier compressé, afin de pouvoir travailler sur ce fichier et le modifier.

Deux des caractéristiques des fichiers JPEG apparaissent gênantes en vue d'opérer une telle modification :

- certaines informations de codage des blocs sont codées en mode différentiel, de sorte que le codage d'un bloc de pixels donné dépend du codage du bloc précédent. C'est le cas du coefficient continu de chaque bloc de pixels. En conséquence, il n'est donc pas possible de modifier facilement une zone, bloc ou pluralité de blocs de l'image, et donc de modifier son codage, sans rendre le codage des zones ou blocs des zones suivantes incohérent ;
- le codage de Huffman utilisé a pour effet que chaque bloc de pixels composant l'image est codé sur un nombre de bits variable. En conséquence, toute modification partielle d'un fichier JPEG, sans recopie des zones non modifiées de l'image, doit tenir compte de l'alignement sur 8 bits et de la maitrise de la nouvelle taille du code de la partie d'image modifiée. De plus, il est impossible d'accéder facilement à un bloc de pixels donné sans décompresser tous les blocs précédents.

La structure du format d'un fichier d'image JPEG correspondant à l'image de la figure la est représentée en figure 1c entre une adresse de début et une adresse de fin. On note, en particulier, que les valeurs du nombre de bits de chaque bloc de pixels codés sont le plus souvent différents. Ainsi, l'accès indépendant et séparé à chacun des champs correspondant ne peut être effectué.

En conséquence, la seule méthode simple pour modifier partiellement un fichier JPEG est de décompresser complètement l'image en fichier BITMAP, de la modifier dans ce format, puis de la recompresser en mode JPEG.

Un tel processus apparait complexe, lourd à exécuter et finalement peu pratique, notamment pour une mise en oeuvre industrielle, par intégration dans des appareils dédiés, tels que les télécopieurs, les imprimantes couleurs multifonctions, exécutant les fonctions de télécopieur, par exemple.

Pour pallier un tel inconvénient, et simplifier le processus du mode opératoire correspondant pour envoyer une télécopie couleur en différé, actuellement, on scanne l'image, en mode BITMAP, et l'on ajoute au flux de données numériques transmis par le scanner un bandeau LIC indiquant, notamment, l'heure du scan du fichier image, puis l'on compresse et on stocke cette image sous forme de fichier JPEG, avant que ce dernier ne soit envoyé par télécopie ultérieurement.

Afin de conserver toutes les qualités de l'image initiale, il faudrait, en toute logique, scanner l'image en un fichier BITMAP, la compresser sous forme de fichier JPEG, et, lors de sa transmission par télécopie, modifier le fichier JPEG en y insérant un bandeau indiquant l'heure d'émission, ainsi qu'il est normalement pratiqué pour la transmission d'une télécopie en noir et blanc.

Un tel mode opératoire ne peut être facilement mis en oeuvre dans le cadre de la télécopie couleur, pour des questions d'occupation de mémoire, insuffisante en général pour décompresser une image dans les appareils embarqués, et de coûts en temps de calcul.

La présente invention a pour objet de remédier aux inconvénients des techniques de modification d'image JPEG de l'art antérieur, grâce à la mise en oeuvre d'un processus spécifique, opérant par décompression partielle du fichier JPEG d'origine.

En particulier, le procédé et le dispositif de traitement d'un fichier d'image JPEG d'origine, objet de l'invention, s'applique à tout fichier JPEG comportant une suite de champs de bits de longueur variable représentatifs d'une suite de blocs de pixels.

Le procédé objet de l'invention est remarquable en ce qu'il consiste à décompresser partiellement le fichier d'image JPEG d'origine sur au moins une suite de blocs de pixels et à conserver la partie non décompressée de ce fichier d'image JPEG, engendrer un fichier d'image JPEG auxiliaire comportant au moins une suite de blocs de pixels compatible avec la partie non décompressée du fichier d'image JPEG d'origine et représentée par au moins une suite de champs de bits auxiliaire compatible, puis à substituer à cette au moins une suite de blocs de pixels décompressée du fichier d'image JPEG d'origine cette au moins une suite de blocs de pixels auxiliaire, par concaténation de cette au moins une suite de champs de bits auxiliaire compatible et de la partie non décompressée du fichier d'image JPEG d'origine. Ceci permet d'engendrer un fichier d'image JPEG traité.

Selon un autre aspect du procédé objet de l'invention, pour une unité de codage minimum MCU définissant une taille de bloc de pixels correspondant à un sous-échantillonnage déterminé, l'opération consistant à décompresser partiellement le fichier d'image JPEG d'origine sur au moins une suite de blocs de pixels et conserver la partie non décompressée du fichier d'image JPEG inclut, en outre la décompression des blocs de pixels de la première MCU de rang i+1 de la partie non décompressée du fichier d'image JPEG d'origine, pour discriminer la valeur du coefficient continu du premier bloc de pixels de la partie non décompressé du fichier d'image JPEG d'origine.

Le procédé objet de l'invention est, en outre, remarquable en ce que pour l'obtention d'une compatibilité de codage de cette au moins une suite de blocs de pixels auxiliaire et de la partie non décompressée du fichier d'image JPEG d'origine adjacente à cette au moins une suite de blocs de pixels auxiliaire, l'étape consistant à engendrer un fichier d'image JPEG auxiliaire compatible inclut au moins l'analyse du dernier bloc de pixels de cette au moins une suite de blocs de pixels obtenue par décompression, pour discriminer la valeur du coefficient continu du dernier bloc de pixels, l'alignement de la valeur du coefficient continu du dernier bloc de pixels à partir de la valeur du coefficient continu du premier bloc de pixels de la partie adjacente non décompressée du fichier d'image JPEG d'origine à la valeur du coefficient continu du dernier bloc de pixels de la suite de blocs de pixels décompressée, le codage par compression JPEG de cette au moins une suite de blocs de pixels auxiliaire selon au moins une suite de champs de bits auxiliaire compatible.

Le procédé objet de l'invention est, en outre, remarquable en ce que, dans le but d'obtenir un fichier d'image JPEG traité compatible en taille en nombre de bits successifs et en adressage mémoire avec le fichier d'image JPEG d'origine, il consiste, au moins, à modifier la suite de champs de bits auxiliaire compatible et à adapter le champ d'en-tête élargi.

Le dispositif de traitement d'un fichier d'image JPEG d'origine comportant une suite de champs de bits de longueur variable représentatifs d'une suite de blocs de pixels, objet de l'invention, est remarquable en ce que, outre une unité centrale de traitement, une mémoire de travail et une mémoire de masse reliées à des organes d'entrée-sortie, il comporte un module de décompression partielle du fichier d'image JPEG d'origine sur au moins une suite de blocs de pixels et de stockage de la partie non décompressée du fichier JPEG d'origine, un module générateur par compression JPEG d'un fichier d'image JPEG auxiliaire comportant au moins une suite de blocs de pixels auxiliaire compatible avec la partie non décompressé du fichier d'image JPEG d'origine et représentée par, au moins, une suite de champs de bits auxiliaire compatible, et, un module de substitution à cette au moins une suite de blocs de pixels décompressée du fichier d'image JPEG d'origine de cette au moins une suite de blocs de pixels auxiliaire, par concaténation de cette au moins une suite de champs de bits auxiliaire compatible et de la partie non décompressée du fichier d'image JPEG d'origine, pour engendrer un fichier d'image JPEG traité.

Le procédé et le dispositif de traitement d'un fichier d'image JPEG d'origine objets de l'invention trouvent application à la transmission de télécopies, à la retouche d'images, notamment d'images JPEG, à l'incrustation d'images, à la reprographie, par exemple, ou à toue application impliquant la retouche et/ou l'incrustation d'image.

Ils seront mieux compris à la lecture de la description et à l'observation des dessins ci-après dans lesquels, outre les figures la à 1c relatives au processus de codage JPEG classique,

- la figure 2 représente, à titre purement illustratif, un organigramme des étapes essentielles de mise en oeuvre du procédé de traitement d'un fichier d'image JPEG d'origine par décompression partielle conforme à l'objet de la présente invention ;
- la figure 3a représente, de manière illustrative, le traitement de décompression partielle et de traitement du coefficient continu de la première unité de codage minimum MCU du premier bloc de pixels de la partie non décompressée du fichier d'image JPEG ;
- la figure 3b représente, à titre illustratif, au point 1) et 2) le fichier d'image JPEG d'origine comportant une suite de bits à supprimer respectivement le fichier JPEG traité obtenu par substitution à la suite de bits à supprimer d'une suite de champs de bits auxiliaire compatible par concaténation avec la partie non décompressée du fichier d'image JPEG d'origine.

- La figure 4a représente, à titre illustratif aux points 1), 2) et 3) de celle-ci, la structure d'un fichier JPEG d'origine, l'élargissement de l'entête par allocation de bits arbitraires, puis l'ajustement en taille et en adressage du champ d'entête élargi, pour l'obtention d'un fichier JPEG traité obtenu compatible en taille et en adressage avec le fichier JPEG d'origine, grâce à la mise en oeuvre du procédé objet de l'invention ;
- La figure 4b représente, de manière illustrative, la structure de la dernière unité de codage minimum MCU de la suite de champs de bits auxiliaire compatible de la figure 4a ;
- La figure 4c représente, à titre illustratif, l'application du procédé objet de l'invention à la télécopie.
- La figure 4d représente, à titre illustratif, l'application du procédé objet de l'invention à l'adjonction d'une bande ;
- La figure 5 représente, à titre purement illustratif, l'architecture d'un dispositif de traitement d'un fichier d'image JPEG d'origine conforme à l'objet de la présente invention.

Une description plus détaillée du procédé de traitement d'un fichier d'image JPEG d'origine $JP_o$ comportant une suite de champs de bits de longueur variable représentative d'une suite de bloc de pixels, conforme à l'objet de la présente invention, sera maintenant donnée en liaison avec la figure 2 et les figures suivantes. Dans les figures précitées, les mêmes références désignent les mêmes éléments.

D'une manière générale, on indique que le procédé objet de l'invention, s'applique aux fichiers JPEG d'origine $JP_o$ précités représentatifs d'une image d'origine notée $I_o$.

En référence à la figure 2, le procédé objet de l'invention, consiste en une étape A à décompresser partiellement le fichier d'image JPEG d'origine, $JP_o$, sur au moins une suite de blocs de pixels, les suites de blocs de pixels décompressés étant notées $[\Delta JP_{0}i]$ et à conserver la partie non décompressée du fichier d'images JPEG d'origine, cette opération à l'étape A étant notée

STOCKAGE $[\overline{\Delta JP_0 i}]$.

D'une manière générale, on indique que le procédé objet de la présente invention, peut être mis en oeuvre soit, sur une suite de blocs de pixels, soit sur une pluralité de suites de blocs de pixels d'une image d'origine constituée en un fichier JPEG d'origine, l'indice $_i$ étant représentatif du rang de chaque suite de blocs de pixels soumis à décompression partielle dans le sens de création des blocs de pixels, tels que représentés en figure 1a, puis de compression JPEG représentée en figure 1b de l'art antérieur. Le nombre de suites de blocs de pixels soumis à décompression partielle peut être quelconque de manière non limitative.

L'étape A est alors suivie d'une étape B consistant à engendrer un fichier d'image JPEG auxiliaire, à partir d'une image auxiliaire $I_{aux}$, le fichier d'image JPEG auxiliaire comportant au moins une suite de blocs de pixels auxiliaire compatible avec la partie non décompressée du fichier d'images JPEG d'origine.

L'opération correspondant à l'étape B de la figure 2 est notée

$$\text{CREATION } [C\Delta JP_{auxi}].$$

On comprend que chaque suite de blocs de pixels auxiliaire est compatible avec la partie non décompressée du fichier d'images JPEG d'origine et correspond sensiblement à chaque suite de blocs de pixels décompressés partiellement, l'indice $_i$ de chaque suite de blocs de pixels auxiliaire compatibles $C\Delta JP_{auxi}$ désignant à la fois la correspondance entre chaque suite de blocs de pixels décompressés partiellement et la compatibilité avec la partie non décompressée du fichier d'images JPEG d'origine $\overline{\Delta JP_0 i}$.

Bien entendu, chaque suite de blocs de pixels auxiliaire compatible est représentée par une suite de champs de bits auxiliaire compatible notée $[C\Delta JP_{auxi}]$.

L'étape B est alors suivie d'une étape C consistant à substituer, à une ou plusieurs suites de blocs de pixels décompressés $[\Delta JP_0 i]$ du fichier d'images JPEG d'origine $JP_0$, une suite de blocs de pixels auxiliaire compatibles correspondante par concaténation des blocs de la suite de champs de bits auxiliaires compatibles $C\Delta JP_{auxi}$ et de la partie non décompressée du fichier d'images JPEG d'origine correspondante $\overline{\Delta JP_0 i}$.

Ceci permet d'engendrer un fichier d'image JPEG traité, noté $JP_T$.

Le procédé objet de l'invention, tel qu'illustré et décrit précédemment en liaison avec la figure 2, permet en fait de modifier une ou plusieurs zones d'un fichier d'image JPEG sans décompresser totalement ce dernier.

Plus précisément, le procédé objet de l'invention, a pour objet de remplacer une suite de blocs de pixels représentée par un champ de bits d'un fichier d'image JPEG par un autre, la suite de blocs de pixels auxiliaire compatibles.

En particulier, lorsque le procédé objet de la présente invention est mis en oeuvre au niveau d'un système embarqué tel que, par exemple, une carte à microprocesseur, et dans le but notamment dans cette situation de minimiser les volumes de calcul mis en oeuvre et le besoin en mémoire physique, la décompression partielle apparait particulièrement intéressante, car elle permet de ne pas décompresser l'image JPEG en totalité afin de stocker cette dernière sous forme BITMAP en vue de la modifier, un tel traitement occupant de manière classique plusieurs dizaines de mégaoctets.

Le procédé objet de la présente invention permet au contraire de composer une ou plusieurs suites de blocs de pixels auxiliaires compatibles, d'encoder ces derniers en mode JPEG, de récupérer les suites de champs de bits auxiliaires compatibles représentant ces dernières et écrire ainsi les suites de champs de bits auxiliaires compatibles à la place qu'occupait chacune des suites de blocs de pixels soumises à décompression partielle.

Le procédé objet de l'invention, permet ainsi de prendre en compte les spécificités du processus de codage JPEG selon lesquelles :

- chaque donnée JPEG dépend des données précédentes et le procédé objet de l'invention, permet de prendre en compte la dépendance précitée de façon que l'insertion de données en amont ne modifie pas l'interprétation des données en aval ;
- des données JPEG sont sous forme de code Huffman et chaque unité de données est écrite à la suite de la précédente sans changement d'octet, ce qui nécessite un repérage des données spécifiques ;
- la gestion des tailles en code Huffman notamment de chaque suite de champs de bits auxiliaire compatible après encodage JPEG ainsi que la différence de taille de chaque suite de blocs de pixels soumise à décompression partielle.

Compte tenu de la problématique précédente, une unité de données, sur laquelle intervient le procédé objet de l'invention, est une unité de codage minimum désignée MCU pour Minimum Coding Unit en anglais, laquelle définit une taille de bloc de pixels correspondant à un sous échantillonnage déterminé.

Dans ce but, le procédé objet de l'invention, est mis en oeuvre au niveau des unités de codage minimum MCU précitées en tenant compte des trois composantes de couleur, du sous échantillonnage, tel que le sous échantillonnage 4 :1 :1 espace couleur luminance Y et composantes de chrominance Cb et Cr, table de Huffman et de quantification particulière, codage JPEG séquentiel et non progressif.

Une description plus détaillée de la mise en oeuvre du procédé objet de l'invention, pour assurer la mise en oeuvre de suites de champs de bits auxiliaires compatibles avec la partie non décompressée du fichier d'images JPEG, sera maintenant donnée en liaison avec la figure 3a au niveau de deux unités de codage minimum MCU successives notées $MCU_i$ et $MCU_{i+1}$, i désignant le rang des MCU successives.

L'opération consistant à décompresser partiellement le fichier d'image JPEG d'origine sur au moins une suite de blocs de pixels et conserver la partie non décompressée du fichier d'images JPEG consiste, en outre, à décompresser des blocs de pixels de la première MCU de la partie non décompressée du fichier d'images JPEG c'est-à-dire la MCU de rang i+1 sur la figure 3a pour discriminer la valeur de la composante continue du premier bloc de pixels de la partie non décompressée du fichier d'images JPEG.

En référence à la figure 3a précitée, et dans le cas d'un sous échantillonnage 4 :1 :1, une unité de codage minimum MCU comprend six blocs, quatre blocs pour la composante 0, composante de luminance Y, un bloc pour le composant 1 Cb et un bloc pour la composante 2 Cr.

Au sein d'une composante précitée, le coefficient d'ordre 0 d'un bloc, coefficient continu ou de fréquence nulle après la transformée DCT est codé par sa différence avec celui du bloc précédent.

Dans l'exemple précité représenté en figure 3a, pour toute unité de codage minimum $MCU_k$ donnée de rang k quelconque, on a donc la relation (1) :

Composante 0 : diff(4k+a) = bloc(4k+a)[0] bloc (4k+a-1) [0], a=0, ... , 3
Composante 1 : diff (k) - bloc (k) [0] - bloc (k-1) [0],
Composante 2 : diff(k) = bloc (k) [0] - bloc (k-1) [0].

La dépendance des coefficients continus des blocs 8X8 entre eux est explicitée ci-après.

En référence à la figure 3a, en considérant que la $MCU_i$ est la dernière unité de codage minimum provenant de la suite de champs de bits auxiliaire compatible représentant la suite de blocs de pixels auxiliaire compatible, l'unité de codage minimum antérieure $MCU_{i-1}$ est celle qui se situe immédiatement à gauche de la précédente de rang i, selon le sens de lecture des pixels et des bits du champs de bits auxiliaire compatible. Au contraire, l'unité de codage minimum $MCU_{i+1}$ est celle qui se situe immédiatement à droite de la $MCU_i$.

Selon un aspect remarquable du procédé objet de la présente invention, pour assurer la compatibilité précitée, compatibilité de codage, l'unité de codage minimum $MCU_{i+1}$ reste inchangée, seule l'unité de codage minimum de rang antérieur i, soit $MCU_i$, étant alignée, ainsi qu'il sera explicité ci-après.

Les coefficients continus des blocs 1, 5 et 6 de l'unité de codage minimum $MCU_{i+1}$ sont encodés en fonction des coefficients continus des blocs 4, 5 et 6 de l'unité de codage minimum de rang antérieur i, $MCU_i$.

Seule l'unité de codage minimum $MCU_i$ est modifiée.

Les trois coefficients continus, dont l'encodage est modifié en vue de l'alignement précité, sont les coefficients continus 4, 5, 6 de l'unité de codage minimum $MCU_i$.

Pour assurer l'alignement précité, on code la valeur du coefficient continu en fonction de la valeur théorique déjà encodée de la composante continue de la MCU de rang i+1. On désigne par :

- vc2 la valeur encodée de la composante continue de la MCU de rang i+1 ;
- dc2 la valeur réelle de la composante continue de la MCU de rang i+1 ;

- dc1 la valeur réelle de la composante continue de la MCU de rang i de la suite de blocs de pixels décompressée [$\Delta JP_O i$].

La continuité de l'interprétation de l'image JPEG est ainsi sauvegardée. La lumière et la couleur de l'image, avant et après l'unité de codage minimum de rang i $MCU_i$, sont sauvegardées. Seule l'unité de codage minimum précitée de rang i, ayant trois valeurs réelles de coefficients continus sur six, non conformes à la réalité, est affectée. Cette unité de codage minimum $MCU_i$ est alors volontairement sacrifiée pour assurer la compatibilité de l'ensemble.

Le résultat obtenu est acceptable, car cette unité de codage minimum $MCU_i$ alignée ne représente qu'un minuscule carré sur une image de dimension assez grande, au moins quelques centaines de pixels de large.

Copie des coefficients non continus ou coefficients de fréquence. En ce qui concerne les coefficients de fréquence désignés AC, leur valeur est codée indépendamment des autres.

Dans le but de préserver la continuité des formes de l'image, au niveau de l'unité de codage minimum $MCU_i$ alignée, on procède simplement à la recopie des coefficients fréquentiels présents dans les blocs de la suite de champs de bits auxiliaire compatible.

La conservation des formes au niveau de l'unité de codage minimum de rang i aligné $MCU_i$ est, en général, pas utile. Il est alors possible de désactiver la copie précitée et d'introduire sans inconvénient des valeurs de fin de blocs, notées EOB, conformément à la norme JPEG.

Ainsi, que représenté en figure 3a, le procédé objet de l'invention, permet d'exécuter une compatibilité de codage de chaque suite de blocs de pixels auxiliaire [$C\Delta JP_{auxi}$] et de la partie non décompressée $\lfloor \Delta JP_O i \rfloor$ du fichier d'images JPEG d'origine, adjacente à la suite de blocs de pixels auxiliaire précitée.

Dans ce but, ainsi que représenté en figure 3a, l'étape consistant à engendrer un fichier d'image JPEG auxiliaire inclut au moins l'analyse du dernier bloc de pixels obtenu par décompression [$\Delta JP_O i$] par l'intermédiaire de l'unité de codage minimum MCU de rang i, représentée en figure 3a, pour discriminer la valeur de la composante continue du dernier bloc de pixels considéré, puis l'alignement de la valeur du coefficient continu du dernier bloc de pixels à partir de la valeur de la composante continue du premier bloc de pixels de la partie adjacente non décompressée du fichier d'images JPEG d'origine $\lfloor \Delta JP_O i \rfloor$, à la valeur du coefficient continu du dernier bloc de pixels de la suite de blocs de pixels décompressée.

Le processus d'alignement peut alors être résumé de la manière ci-après, en référence à la figure 3b.

Sur la figure précitée et la figure 4a, G désigne une échelle de graduation en nombre d'octets, une graduation représentant 8 bits.

Le processus précité a pour objet, pour chaque composante de couleur 0, 1, 2, de rendre compatible la valeur dc'1 du coefficient continu du dernier bloc de pixels de la suite de blocs de pixels auxiliaire [$C\Delta JP_{auxi}$] avec la valeur $dc_2$ du coefficient continu du premier bloc de pixels de la partie du fichier JPEG d'origine non décompressée et stockée $\lfloor \Delta JP_O i \rfloor$.

Pour une valeur théorique de la valeur d'encodage de la composante continue $vc_2$ =dc2-dcl, en raison du codage Huffman du fichier JPEG d'origine $JP_O$, où dc1 désigne la valeur réelle de la composante continue du bloc de pixels précédent définie précédemment, dernier bloc de pixels de la suite de blocs de pixels décompressée, l'alignement du coefficient continu dc1 du dernier bloc de pixels de la suite de blocs de pixels auxiliaire [$C\Delta JP_{auxi}$] vérifie la relation (3)

$$d'c1 <= dc1 = dc2 - vc_2.$$

Dans la relation précédente, le symbole <= désigne l'opération d'affectation à d'c1 de la valeur dc1 = dc2 - $vc_2$. On impose ainsi la valeur d'c1 au coefficient continu de la MCU de rang i de la suite de bloc de pixels décompressés [$\Delta JP_O i$].

Chaque dernier bloc de pixels fait partie de la dernière MCU, $MCU_{27}$' sur la figure 3b, de la suite de blocs de pixels auxiliaire [$C\Delta JP_{auxi}$].

Le processus d'alignement selon la relation (3) précitée sur les trois coefficients continus représentés en figure 3a de chacun des derniers blocs, 1 bloc par composante de couleur, s'applique lors du codage par compression JPEG de la dernière MCU, $MCU_i$ de rang i, dans le processus de génération de la suite de bits auxiliaires [$C\Delta JP_{auxi}$], juste avant le codage Huffman. Le processus d'alignement a pour effet de modifier et donc de sacrifier les valeurs théoriques données par la transformée DCT de l'algorithme JPEG classique. En corollaire, l'alignement précité, lors de la décompression JPEG, les valeurs théoriques précitées, la dernière MCU de rang i, $MCU_i$, la $MCU_{27}$ , sur la figure 3b, sont sacrifiées.

Compte tenu des résolutions utilisées, par exemple à une résolution BITMAP de 300 dpi et pour un sous-échantillonnage 1 :1 :1, un bloc de 8×8 pixels présente une surface de 0,45 $mm^2$.

En outre, le choix d'une largeur d'image de 8p+1 en nombre de pixels, p étant un entier, permet de ne coder qu'une seule colonne dans le bloc de pixels correspondant, ce qui réduit par 8 la surface correspondant au bloc de pixels sacrifié. Le défaut de codage JPEG dû au processus d'alignement est alors considéré comme négligeable.

Le codage par compression JPEG de la suite de blocs de pixels auxiliaire est alors effectué pour obtenir une suite de champs de bits auxiliaire compatible [$C\Delta JP_{auxi}$].

Bien entendu, lorsque l'image d'origine est une image couleur et le fichier JPEG d'origine correspond à un fichier JPEG d'images couleur, les étapes de décompression partielles et de génération d'un fichier image JPEG auxiliaire sont exécutées sur les composantes de couleur du fichier d'images JPEG d'origine et du fichier d'images JPEG auxiliaire, en particulier sur les coefficients continus et fréquentiels de ces dernières.

Ceci correspond en particulier au mode de mise en oeuvre représenté en figure 3a pour chaque unité de codage minimum MCU correspondante.

Une représentation du fichier d'images JPEG d'origine, $JP_o$, respectivement du fichier d'images JPEG traité, $JP_T$, suite à la mise en oeuvre du procédé objet de l'invention, tel que décrit en liaison avec la figure 2 et la figure 3a est donnée aux points 1) et 2) de la figure 3b.

Au point 1) de la figure 3b, on note pour le fichier JPEG d'origine $JP_o$ un champ de bits d'entête, la suite de bits à supprimer [$\Delta JP_O i$] correspondant aux unités de codage minimum $MCU_1$ à $McU_{27}$ comportant chacune les composantes $C_1$, $C_2$ et $C_3$ de taille en nombre de bits chacune différente et la partie non décompressée du fichier d'images JPEG d'origine notée $\left|\overline{\Delta JP_O i}\right|$. Cette dernière partie destinée à être conservée et stockée est non décompressée et est réputée formée par les unités de codage minimum $MCU_{28}$ à $MCU_{72}$.

Suite à la mise en oeuvre du procédé objet de l'invention tel que représentée en figures 2 et 3a, on obtient le fichier d'image JPEG traité $JP_T$ constitué par la même entête par la suite de champs de bits auxiliaire [$C\Delta JP_{AUXi}$] et par la partie non décompressée $\left|\overline{\Delta JP_O i}\right|$. La suite de bits auxiliaire précitée est formée par les unités de codage minimum $MCU_1$, à $MCU_{27}$, elles-mêmes formées par les composantes $C_1$, $C_2$ et $C_3$. La suite de blocs de pixels auxiliaire compatible avec la partie non décompressée est concaténée bien entendu à l'entête du fichier JPEG traité mais également à la partie conservée non décompressée $\left|\overline{\Delta JP_O i}\right|$, cette dernière partie conservée non décompressée étant identique à celle du fichier JPEG d'origine $JP_o$.

En raison du caractère quelconque de la taille en bits de la suite de bits formant la suite de blocs de pixels [$\triangle JP_O i$] et de la suite de blocs de pixels auxiliaire compatible représentée par la suite de champs de bits auxiliaire compatible [$C\Delta JP_{auxi}$] les deux fichiers d'images JPEG d'origine respectivement traité peuvent avoir une taille différente.

Cette particularité inhérente à la mise en oeuvre du codage JPEG du fichier d'images JPEG auxiliaire, présente l'inconvénient de nécessiter d'une part, la mémorisation par stockage de la partie non décompressée du fichier d'images JPEG d'origine c'est-à-dire de la partie $\left|\overline{\Delta JP_O i}\right|$ et de la suite de champs de bits auxiliaire compatible [$C\Delta JP_{AUXi}$] afin de procéder à la concaténation de ces derniers.

Le mode opératoire précité peut bien entendu être exécuté lorsque le procédé de traitement, objet de l'invention, est mis en oeuvre sur des dispositifs ou machines appartenant à des installations fixes ou en réseau, tels que imprimantes, photocopieurs ou télécopieurs.

Toutefois, le procédé objet de l'invention, a également vocation, dans un mode de mise en oeuvre préférentiel non limitatif, à être exécuté à partir d'un système embarqué tel qu'une carte à microprocesseur, par exemple.

Dans ce but, il est alors opportun, selon un aspect remarquable du procédé objet de l'invention, d'assurer une compatibilité stricte, en termes d'adressage mémoire et d'occupation de zones mémoire, entre le fichier JPEG d'origine $JP_O$ et le fichier d'image JPEG traité $JP_T$.

La compatibilité stricte en terme d'adressage et d'occupation de zones mémoire des deux fichiers précités s'entend de la mise en correspondance bi-univoque entre l'adresse de départ A et A' de mémorisation de l'entête et du début de chacun des fichiers précités ainsi que de l'adresse de début et de l'adresse de fin de la suite de bits à supprimer [$\triangle JP_O i$] et de la suite de champs de bits auxiliaire [$C\Delta JP_{AUXi}$].

Dans ce but, à titre d'exemple non limitatif, ainsi que représenté en figure 4a dans laquelle au point 1) le fichier JPEG d'origine $JP_o$ THÉORIQUE identique à celui de la figure 3b est représenté, le procédé objet de l'invention, peut consister en outre, préalablement à la construction du fichier JPo, à attribuer au fichier d'images JPEG d'origine, ainsi que représenté à l'étape 2 de la figure 4a, un champ d'entête élargi en nombre d'octets et à allouer au champ d'entête élargi un pseudo commentaire formé par une séquence de bits déterminée. Sur la figure 4a, au point 2) de celle-ci, on a représenté l'allocation d'un pseudo commentaire par la partie hachurée par exemple.

Suite à l'étape de création de la suite de champs de bits auxiliaire compatible [$C\Delta JP_{AUXi}$] le procédé objet de l'invention tel que représenté en figure 4a, consiste au moins à partir de l'étape 2) à modifier la suite de champs de bits auxiliaire compatible [$C\Delta JP_{AUXi}$] et à adapter le champ d'en-tête élargi et le pseudo commentaire en longueur en nombre d'octets, après concaténation de la suite de blocs de pixels auxiliaire compatible et de la partie non décompressée du fichier d'images JPEG traité en fonction de la taille mémoire en nombre de bits du fichier d'images JPEG d'origine.

En référence à la figure 4a au point 2) de celle-ci, on comprend que, par la modification et l'adaptation précitées, on peut ainsi se ramener au point 3) de la même figure 4a, où suite à la concaténation de la suite de bits auxiliaire compatible, on obtient en fait le nouvel entête comportant, le cas échéant, pour partie le pseudo commentaire, dont la longueur a été adaptée, la suite de champs de bits auxiliaire compatible [$C\Delta JP_{AUXi}$] et finalement la partie non décompressée du fichier d'images JPEG d'origine conservé, c'est-à-dire la partie $[\overline{\Delta JP_O i}]$.

En référence à la figure 4a, on indique que le fait de rendre compatible en adressage et en taille mémoire le fichier JPEG traité et le fichier JPEG d'origine permet de résoudre les contraintes ci-après :

1/ alignement sur un octet du début du nouveau flux de bits correspondant à la nouvelle image dans le fichier JPEG traité
2/ identité de la taille du fichier JPEG traité et de celle du fichier JPEG d'origine.

Le mode opératoire correspondant permet de ne pas recopier en mémoire la partie non décompressée du fichier d'image JPEG d'origine, c'est-à-dire la partie $[\overline{\Delta JP_O i}]$.

On comprend ainsi que la création du nouveau fichier JPEG traité $JP_T$ consiste alors simplement à inscrire en mémoire sur les bits existants, l'entête plus $\Delta JP_O i$, l'entête ainsi que la suite de champs de bits auxiliaire compatible [$C\Delta JP_{AUXi}$].

Ce mode opératoire apparait particulièrement satisfaisant dans la mesure où la simple recopie en mémoire permet d'effectuer la concaténation à moindre coût de calcul, les contraintes ci-après étant respectées :

- alignement sur un octet du début du nouveau flux de bits correspondant à la nouvelle image dans le fichier d'image JPEG traité $JP_T$ ;
- taille du fichier JPEG traité $JP_T$ identique au fichier JPEG d'origine $JP_o$.

En référence à la figure 4a, et suite à l'exécution de l'étape 2) de la figure précitée, c'est-à-dire que lorsque le champ d'entête élargi en nombre de bits a été attribué, le procédé consiste alors successivement à :

- déterminer le nombre de flux de bits correspondant aux lignes de pixels que l'on souhaite modifier, c'est-à-dire la suite de bits à remplacer dans le fichier JPEG d'origine. Ce nombre de bits s'exprime sous la forme 8*K+d où d est le décalage en bits ainsi que représenté au point 1) de la figure 4a ;
- déterminer le nombre de bits dans le flux de Huffman correspondant aux n nouvelles lignes de la suite de bits auxiliaire, ce nombre de bits étant exprimé sous la forme 8*k'+d' ;
- déterminer le nombre de bits de la suite de bits auxiliaire correspondant à un bloc au choix de la dernière unité de codage minimum MCU, soit la MCU de rang 27' au point 3) de la figure 4a, et ne codant pas le coefficient continu soumis au processus d'alignement, ce nombre s'exprimant sous la forme 8*k" + d" seconde ainsi que représenté en figure 4b ;
- remplacer dans la suite de bits auxiliaire les bits correspondant aux coefficients fréquentiels codés en Huffman et les éventuels marqueurs de fin de bloc, notés EOB, par des bits représentant le codage Huffman d'un ou plusieurs nouveaux coefficients de fréquence choisis de manière spécifique avec éventuellement un motif de fin de bloc EOB, de façon que l'on dispose d'une nouvelle suite de bits auxiliaire de taille 8* k"' + d"', ainsi que représenté au point 3) de la figure 4a.

Le choix spécifique des nouveaux coefficients fréquentiels est effectué de façon que d"'= d (modulo 8).

Dans cette hypothèse, la taille du codage Huffman des nouveaux coefficients fréquentiels et de l'éventuel motif de fin de bloc EOB est de la forme 8*k"" + d"" avec d"" = d-d'+d" (modulo 8).

Les composantes fréquentielles modifiées font, toutefois, partie de l'unité de codage minimum MCU déjà sacrifiée, ce qui n'altère pas la qualité de l'image, ainsi que mentionné précédemment.

Pour la mise en oeuvre de l'étape 3) de la figure 4a, on comprend ainsi, que suite à la récupération de l'entête du fichier JPEG d'origine $JP_o$, on procède ensuite à la réduction ou à l'agrandissement du nombre d'octets inutiles des champs de commentaires dans cet entête, de façon à ce que la différence en octets entre l'entête original et le nouvel entête traité obtenu représenté au point 3) de la figure 4a, soit égale à k-k"'.

La concaténation de ce nouvel entête précité avec la suite de champs de bits auxiliaire compatible, permet de créer ainsi et d'obtenir le fichier JPEG traité $JP_T$ .

En fin d'étape 3) de la figure 4a, on dispose ainsi au bit près, d'une taille identique entre le début de fichier original, entête original et suite de blocs de pixels correspondant au codage Huffman de la suite de blocs décompressés, et le début du fichier traité entête ou nouvel entête traité et suite de champs de bits correspondant au codage Huffman de la suite de champs de bits auxiliaire compatible.

Il est ainsi possible d'écraser le début du fichier JPEG d'origine par le début du fichier traité, ce qui permet d'effectuer l'opération de concaténation par simple adressage en mémoire.

Une application du procédé objet de l'invention, à la transmission par télécopie en différé d'un fichier d'image JPEG d'origine, sera maintenant illustrée en liaison avec la figure 4c.

Dans cette hypothèse, une suite de blocs de pixels est formée par un multiple entier de lignes de blocs de pixels comprenant la première ligne et le fichier d'image JPEG auxiliaire est alors formé par un même multiple entier de lignes de blocs de pixels pour constituer un bandeau LIC de transmission.

L'application du procédé objet de l'invention, dans cette hypothèse, concerne l'envoi différé d'une télécopie en couleur par exemple.

L'image est numérisée et stockée en mémoire au format JPEG, ce format, pour des raisons de taille mémoire et de normes dans le cas de la télécopie couleur, étant le format retenu pour la transmission.

Lorsque l'envoi est différé et que l'utilisateur souhaite ajouter une ligne d'identification du correspondant, ligne LIC, les techniques antérieures consistaient à :

- soit décompresser complètement l'image, inclure la ligne LIC dans l'image, processus qui ne pouvait pas être exécuté à partir d'un système embarqué pour les raisons techniques mentionnées précédemment dans la description ;
- soit inclure la ligne d'identification du correspondant LIC au moment de la numérisation.

Le processus de décompression complète est consommateur de ressources de calcul et de mémorisation.

Le mode opératoire d'inclusion de la ligne d'identification présente l'inconvénient que la date indiquée dans ces lignes ne correspondait pas forcément à la date de l'envoi effectif.

Grâce au procédé objet de l'invention, la ligne d'identification du correspondant peut être calculée et incluse simultanément à l'envoi dans l'image originale de manière particulièrement simple et rapide.

Le procédé objet de l'invention, n'est pas limité au remplacement d'une bande de blocs de pixels représentée par une suite de champs de bits en codage Huffman pour la transmission d'une télécopie par l'entête d'identification du correspondant.

De manière avantageuse, il peut également être mis en oeuvre pour exécuter le traitement d'un fichier d'image JPEG d'origine par incrustation ou par adjonction.

Dans cette hypothèse, l'incrustation peut être effectuée à des endroits sensiblement quelconques du fichier image JPEG d'origine, à partir d'un ou plusieurs motifs d'incrustation de taille déterminée en nombre de blocs de pixels successif.

Dans le cas de l'adjonction, ainsi que représenté en figure 4d, aux points 1) et 2), la suite de bits à supprimer [$\Delta JP_o i$] est sensiblement nulle, [$\Delta JP_o$=0], et le processus d'alignement assurant la compatibilité de codage consiste à allouer à la composante continue d'c1 la dernière MCU de la suite de blocs de pixels auxiliaire compatible [$C\Delta JP_{AUXi}$] rajoutée une valeur spécifique, la valeur zéro. Cette valeur permet d'assurer le codage différentiel vc2=dc2 de la MCU suivante, première MCU du fichier $JP_o$.

Une description plus détaillée d'un dispositif de traitement d'un fichier d'image JPEG d'origine comportant une suite de champs de bits de longueur variable représentatif d'une suite de blocs de pixels, conforme à l'objet de la présente invention, sera maintenant donnée en liaison avec la figure 5.

De manière classique, le dispositif objet de l'invention comprend, outre une unité centrale de traitement CPU, une mémoire de travail RAM et une mémoire de masse MME reliées à des organes d'entrée/sortie I/O.

De manière remarquable, le dispositif selon l'invention comprend un module M1 de décompression partielle du fichier d'images JPEG d'origine sur au moins une suite de blocs de pixels et de stockage de la partie non décompressée du fichier d'images JPEG d'origine, ainsi que décrit précédemment dans la description.

Il comporte, en outre, un module M2 générateur par compression JPEG d'un fichier d'image JPEG auxiliaire, au moins une suite de blocs de pixels auxiliaire compatible avec la partie non décompressée du fichier d'images JPEG d'origine et représentée par au moins une suite de champs de bits auxiliaire compatible.

Il comprend enfin, un module M3 de substitution à cette au moins une suite de blocs de pixels décompressée du fichier d'images JPEG d'origine de cette au moins une suite de blocs de pixels auxiliaire par concaténation de cette au moins une suite de champs de bits auxiliaire compatible et de la partie non décompressée du fichier d'images JPEG d'origine, afin d'engendrer le fichier d'image JPEG traité $JP_T$.

De préférence, et dans un mode de mise en oeuvre non limitatif, le module M1 de décompression partielle, le module M2 générateur par compression JPEG et le module M3 de substitution, sont chacun formés par un module de programme d'ordinateur implanté dans une ou plusieurs mémoire de programme d'ordinateur.

Le dispositif objet de l'invention tel que représenté en figure 5, peut avantageusement être intégré dans ou directement connectable à un télécopieur, une imprimante, une machine de reprographie ou une carte à microprocesseur.

En particulier, lorsque le dispositif objet de l'invention, est intégré dans une carte à microprocesseur, le module de mémoire de masse MME et le module de substitution M3 peuvent comprendre avantageusement une mémoire électronique non volatile programmable permettant l'opération de concaténation par adressage ainsi que mentionné précédemment dans la description.

L'invention couvre enfin un programme d'ordinateur comportant une suite d'instructions exécutables par un ordinateur ou par un dispositif dédié muni d'une unité centrale de traitement, ainsi que représenté en figure 5.

Le programme d'ordinateur précité est remarquable en ce que, lors de l'exécution de ces instructions, ce programme met en oeuvre les étapes du procédé objet de l'invention, tel que décrit précédemment dans la description en liaison avec la figure 2 et des figures suivantes.

De préférence, le programme d'ordinateur précité comporte un ou plusieurs modules de programme M1, M2, M3, implantés dans une ou plusieurs mémoires de programme d'ordinateur par exemple, ainsi qu'illustré en Figure 5.

## Revendications

1. Procédé de traitement d'un fichier d'image JPEG d'origine comportant une suite de champs de bits de longueur variable représentatifs d'une suite de blocs de pixels, consistant à décompresser partiellement ledit fichier d'image JPEG d'origine sur au moins une suite de blocs de pixels et conserver la partie non décompressée dudit fichier d'image JPEG d'origine, **caractérisé en ce qu'**il consiste au moins à :

   - engendrer un fichier d'image JPEG auxiliaire comportant au moins une suite de blocs de pixels auxiliaire compatible avec la partie non décompressée dudit fichier d'image JPEG d'origine et représentée par au moins une suite de champs de bits auxiliaire compatible ;
   - substituer à ladite au moins une suite de blocs de pixels décompressée dudit fichier d'image JPEG d'origine ladite au moins une suite de blocs de pixels auxiliaire, par concaténation de ladite au moins une suite de champs de bits auxiliaire compatible et de ladite partie non décompressée dudit fichier d'image JPEG d'origine, ce qui permet d'engendrer un fichier d'image JPEG traité.

2. Procédé selon la revendication 1, **caractérisé en ce que** pour une unité de codage minimum MCU de rang i, définissant une taille de bloc de pixels correspondant à un sous-échantillonnage déterminé, l'opération consistant à décompresser partiellement ledit fichier d'image JPEG d'origine sur au moins une suite de blocs de pixels et conserver la partie non décompressée dudit fichier d'image JPEG, inclut en outre la décompression des blocs de pixels de la première MCU de rang i+1 de la partie non décompressée dudit fichier d'image JPEG d'origine $\left[\overline{\Delta JP_O i}\right]$, pour discriminer la valeur du coefficient continu (VC2) du premier bloc de pixels de ladite partie non décompressée du fichier d'image JPEG d'origine.

3. Procédé selon la revendication 2, **caractérisé en ce que**, pour l'obtention d'une compatibilité descendante de ladite au moins une suite de blocs de pixels auxiliaire $[C\Delta JP_{AUXi}]$ et de ladite partie non décompressée $\left[\overline{\Delta JP_O i}\right]$ dudit fichier d'image JPEG d'origine adjacente à cette au moins une suite de blocs de pixels auxiliaire, ladite étape consistant à engendrer un fichier d'image JPEG auxiliaire compatible, inclut au moins:

   - l'analyse du dernier bloc de pixels de ladite au moins une suite de blocs de pixels obtenue par décompression, pour discriminer la valeur (d'$c_1$) du coefficient continu dudit dernier bloc de pixels ;
   - l'alignement de la valeur du coefficient continu (d'c1) du coefficient continu dudit dernier bloc de pixels à partir de la valeur réelle de la composante continue (dc2) du premier bloc de pixels de la partie adjacente non décompressée du fichier d'image JPEG d'origine $\left[\overline{\Delta JP_O i}\right]$ et de la valeur encodée de la composante continue du premier bloc de pixels (vc2) de la partie adjacente non décompressée du fichier d'images JPEG d'origine $\left[\overline{\Delta JP_O i}\right]$ ;
   - le codage par compression JPEG de ladite au moins une suite de blocs de pixels auxiliaire selon au moins une suite de champs de bits auxiliaire compatible.

4. Procédé selon l'une des revendications 1 à 3, **caractérisé en ce que** pour une image couleur, les étapes de décompression partielle et de génération d'un fichier image JPEG auxiliaire sont exécutées sur les composantes de couleur du fichier d'image JPEG d'origine et du fichier d'image JPEG auxiliaire.

5. Procédé selon l'une des revendications 1 à 4, **caractérisé en ce que**, dans le but d'obtenir un fichier d'image JPEG traité compatible en taille en nombre de bits successifs et en adressage mémoire avec ledit fichier d'image JPEG d'origine, ledit procédé consiste au moins à :

   - modifier la suite de champs de bits auxiliaire compatible ; et à
   - adapter le champ d'en-tête élargi.

6. Procédé selon la revendication 5, **caractérisé en ce que** l'étape d' adaptation du champ d'en-tête élargi consiste, après attribution audit fichier d'image JPEG d'origine théorique d'un champ d'en-tête élargi en nombre de bits, à :

   - allouer audit champ d'en-tête élargi un pseudo commentaire formé par une séquence de bits déterminée ;

- adapter ledit pseudo commentaire en longueur en nombre de bits, après concaténation de ladite au moins une suite de blocs de pixels auxiliaire compatible et de ladite partie non décompressée dudit fichier d'image JPEG traité, en fonction de la taille mémoire en nombre de bits dudit fichier d'image JPEG d'origine.

**7.** Procédé selon l'une des revendications 1 à 6, **caractérisé en ce que**, pour la transmission par télécopie d'un fichier d'image JPEG d'origine, ladite au moins une suite de blocs de pixels est formée par un multiple entier de lignes de blocs de pixels comprenant la première ligne et **en ce que** ledit fichier d'image JPEG auxiliaire est formé par un même multiple entier de lignes de blocs de pixels, pour constituer un bandeau LIC de transmission.

**8.** Procédé selon l'une des revendications 1 à 7, **caractérisé en ce que** pour un traitement d'un fichier d'image JPEG d'origine par adjonction, ledit procédé consiste au moins, à partir d'une suite de bits à supprimer sensiblement nulle, à exécuter un processus d'alignement consistant à allouer à la composante continue de la dernière unité de codage minimum de la suite de blocs de pixels auxiliaire compatible rajoutée une valeur spécifique, égale à zéro.

**9.** Dispositif de traitement d'un fichier d'image JPEG d'origine comportant une suite de champs de bits de longueur variable représentatifs d'une suite de blocs de pixels, ce dispositif comportant outre une unité centrale de traitement, une mémoire de travail et une mémoire de masse reliées à des organes d'entrée-sortie, et des moyens (M1) de décompression partielle dudit fichier d'image JPEG d'origine sur au moins une suite de blocs de pixels et de stockage de la partie non décompressée dudit fichier d'image JPEG d'origine, **caractérisé en ce qu'**il comporte en outre :

- des moyens (M2) générateurs par compression JPEG d'un fichier d'image JPEG auxiliaire comportant au moins une suite de blocs de pixels auxiliaire compatible avec la partie non décompressée dudit fichier d'image JPEG d'origine et représentée par au moins une suite de champs de bits auxiliaire compatible ;
- des moyens (M3) de substitution à cette au moins une suite de blocs de pixels décompressée du fichier d'image JPEG d'origine de cette au moins une suite de blocs de pixels auxiliaire, par concaténation de cette au moins une suite de champs de bits auxiliaire compatible et de ladite partie non décompressée dudit fichier d'image JPEG d'origine, pour engendrer un fichier d'image JPEG traité.

**10.** Dispositif selon la revendication 9, **caractérisé en ce que** lesdits moyens (M1) de décompression partielle, lesdits moyens (M2) générateurs par compression JPEG et lesdits moyens (M3) de substitution sont chacun formés par un module de programme d'ordinateur implanté dans une ou plusieurs mémoires de programmes d'ordinateur.

**11.** Dispositif selon l'une des revendications 9 ou 10, **caractérisé en ce que** celui-ci est intégré dans ou directement connectable à un télécopieur, une imprimante, une machine de reprographie, une carte à microprocesseur.

**12.** Dispositif selon la revendication 11, **caractérisé en ce que** lorsque ledit dispositif est intégré dans une carte à microprocesseur, lesdits moyens de mémoire de masse et lesdits moyens de substitution incluent une mémoire électronique non volatile programmable permettant l'opération de concaténation par adressage.

**13.** Programme d'ordinateur comportant une suite d'instructions exécutable par un ordinateur ou par un dispositif dédié muni d'une unité centrale de traitement, **caractérisé en ce que** lors de l'exécution desdites instructions ledit programme d'ordinateur met en oeuvre les étapes du procédé selon l'une des revendications 1 à 8.

**14.** Programme d'ordinateur selon la revendication 13, **caractérisé en ce qu'**il comporte un ou plusieurs modules de programmes implantés dans une ou plusieurs mémoires de programmes d'ordinateurs.

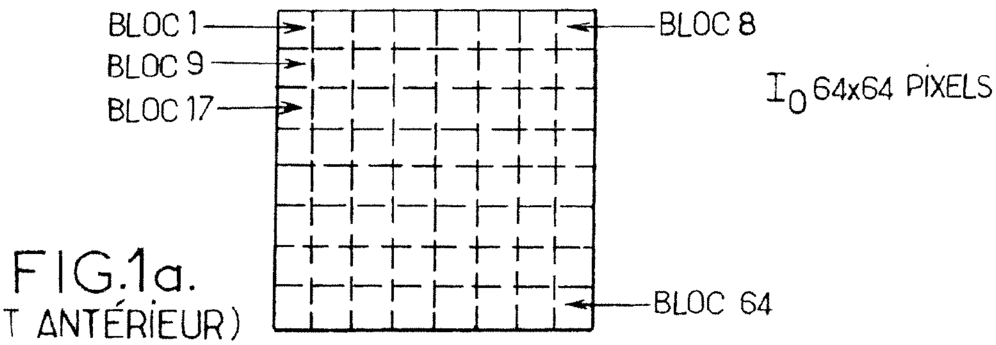


FIG.1a.
(ART ANTÉRIEUR)

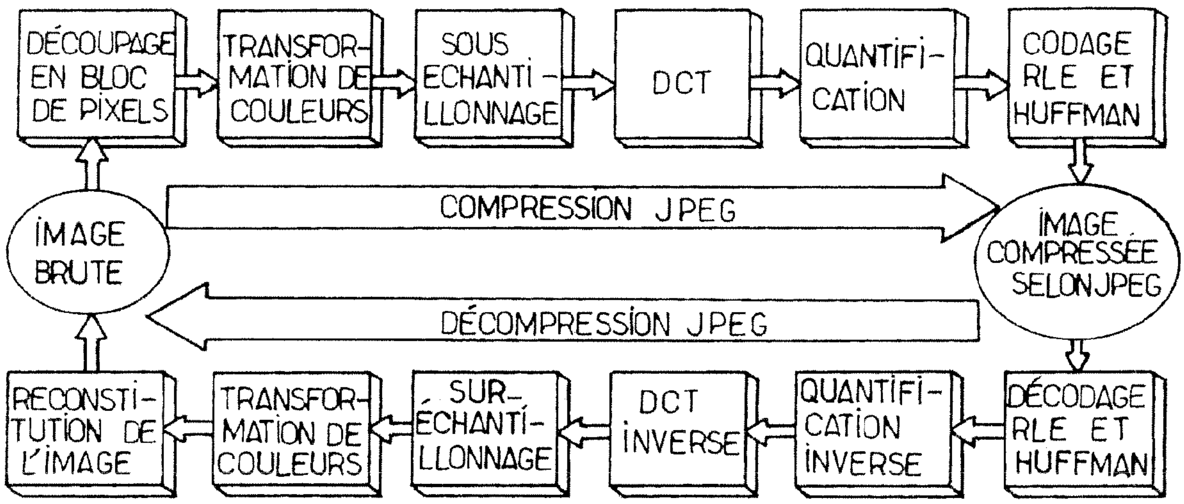


FIG.1b. COMPRESSION / DÉCOMPRESSION JPEG
(ART ANTÉRIEUR)

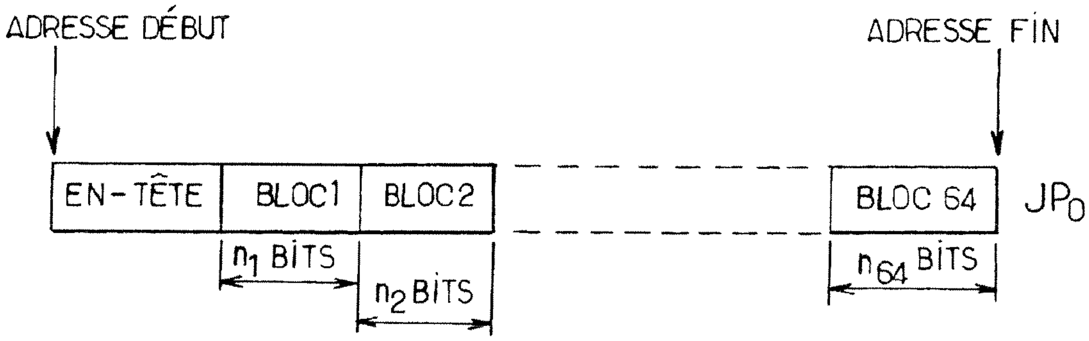


FIG.1c.
(ART ANTÉRIEUR)

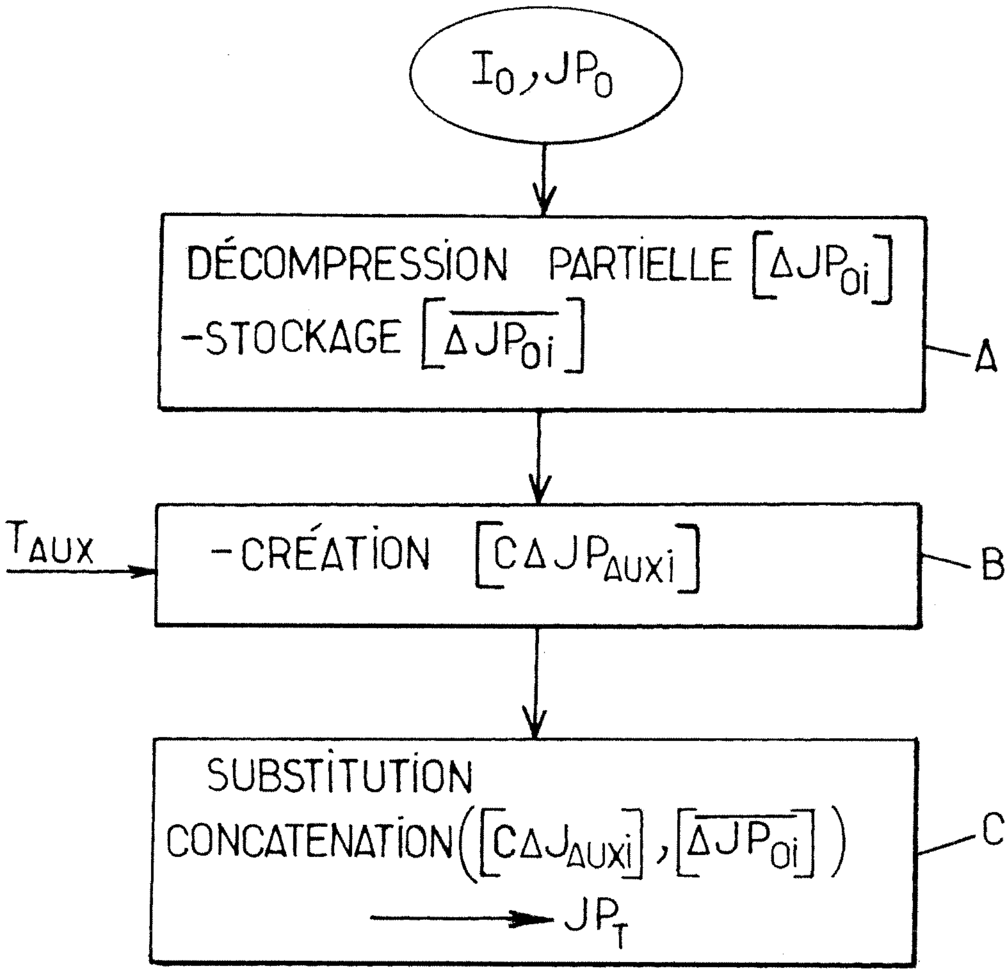
I0, JP0
DÉCOMPRESSION PARTIELLE [ΔJP0i]
-STOCKAGE [ΔJP0i]
A
TAUX
-CRÉATION [CΔJPAUXi]
B
SUBSTITUTION
CONCATENATION([CΔJAUXi], [ΔJP0i])
JPT
C

FIG.2.

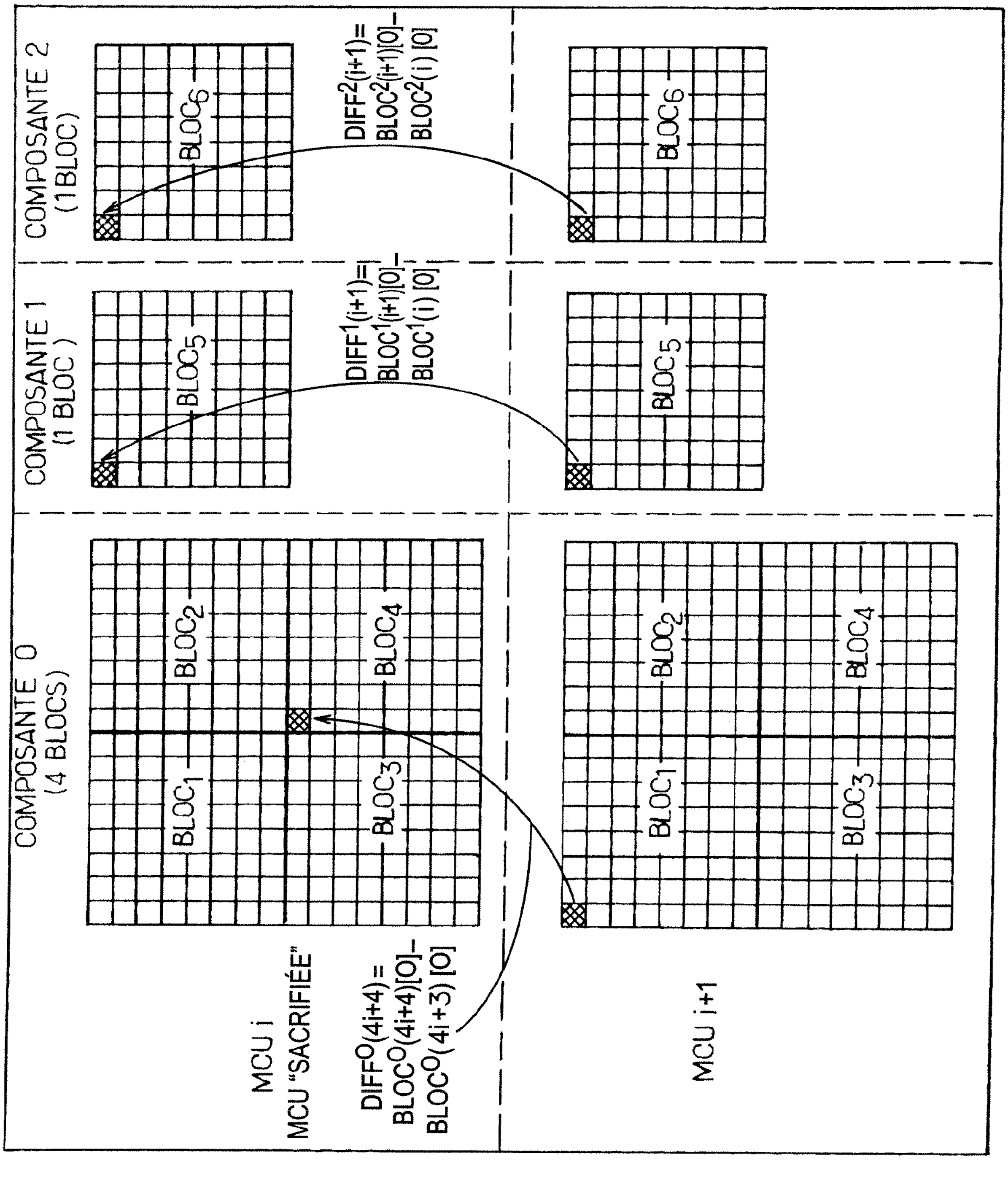
COMPOSANTE 0
(4 BLOCS)
$BLOC_1$
$BLOC_2$
$BLOC_3$
$BLOC_4$
COMPOSANTE 1
(1 BLOC )
$BLOC_5$
COMPOSANTE 2
(1BLOC)
$BLOC_6$
$DIFF^1(i+1)=$
$BLOC^1(i+1)[0]-$
$BLOC^1(i)[0]$
$DIFF^2(i+1)=$
$BLOC^2(i+1)[0]-$
$BLOC^2(i)[0]$
MCU i
MCU "SACRIFIÉE"
$DIFF^0(4i+4)=$
$BLOC^0(4i+4)[0]-$
$BLOC^0(4i+3)[0]$
MCU i+1
$BLOC_1$
$BLOC_2$
$BLOC_3$
$BLOC_4$
$BLOC_5$
$BLOC_6$

FIG.3a.

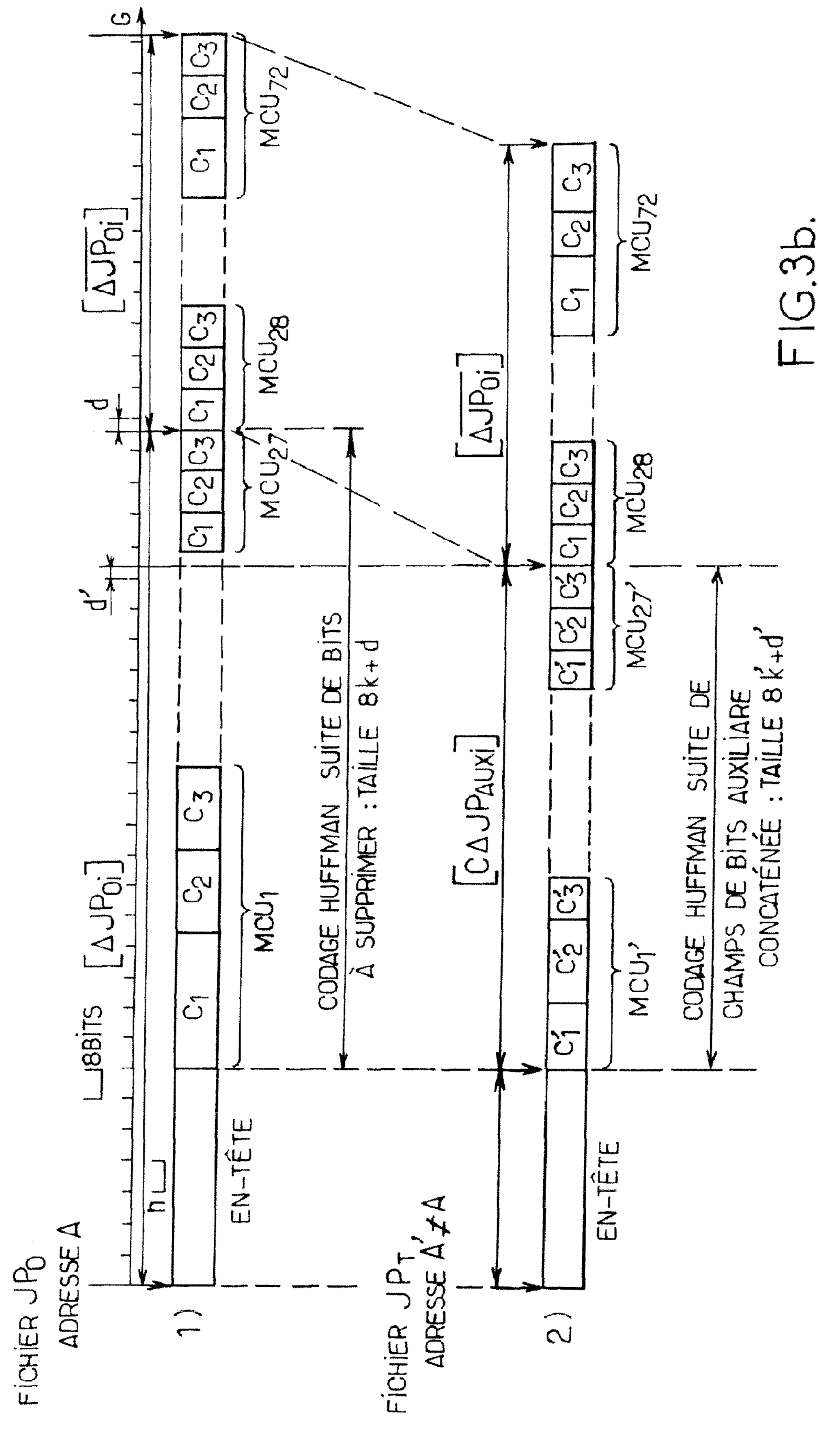
FICHIER JP0
ADRESSE A
1)
EN-TÊTE
h
8BITS
[ΔJP0i]
C1
C2
C3
MCU1
MCU27
MCU28
MCU72
d
d'
G
CODAGE HUFFMAN SUITE DE BITS
À SUPPRIMER : TAILLE 8k+d
[CΔJPAUXi]
FICHIER JPT
ADRESSE A'≠A
2)
C'1
C'2
C'3
MCU1'
MCU27'
CODAGE HUFFMAN SUITE DE
CHAMPS DE BITS AUXILIARE
CONCATÉNÉE : TAILLE 8k'+d'

FIG.3b.

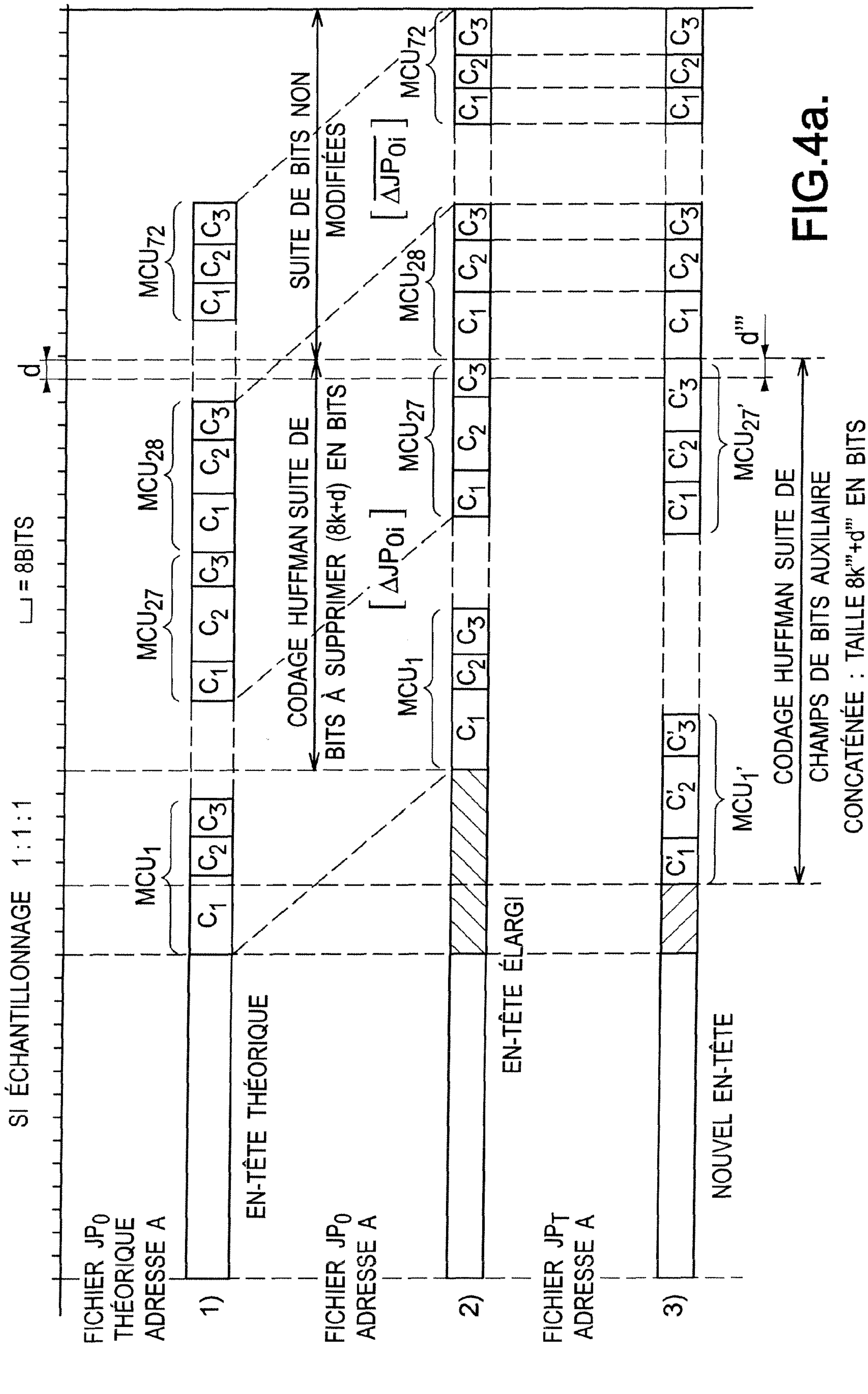
SI ÉCHANTILLONNAGE 1 : 1 : 1
⊔ = 8BITS
FICHIER $JP_0$ THÉORIQUE ADRESSE A
1)
EN-TÊTE THÉORIQUE
$MCU_1$
$C_1$ $C_2$ $C_3$
$MCU_{27}$
$MCU_{28}$
$MCU_{72}$
CODAGE HUFFMAN SUITE DE BITS À SUPPRIMER (8k+d) EN BITS
[$\Delta JP_{0i}$]
SUITE DE BITS NON MODIFIÉES
[$\overline{\Delta JP_{0i}}$]
d
FICHIER $JP_0$ ADRESSE A
2)
EN-TÊTE ÉLARGI
FICHIER $JP_T$ ADRESSE A
3)
NOUVEL EN-TÊTE
$MCU_1'$
$C'_1$ $C'_2$ $C'_3$
$MCU_{27}'$
d'''
CODAGE HUFFMAN SUITE DE CHAMPS DE BITS AUXILIAIRE CONCATÉNÉE : TAILLE 8k'''+d''' EN BITS

FIG.4a.

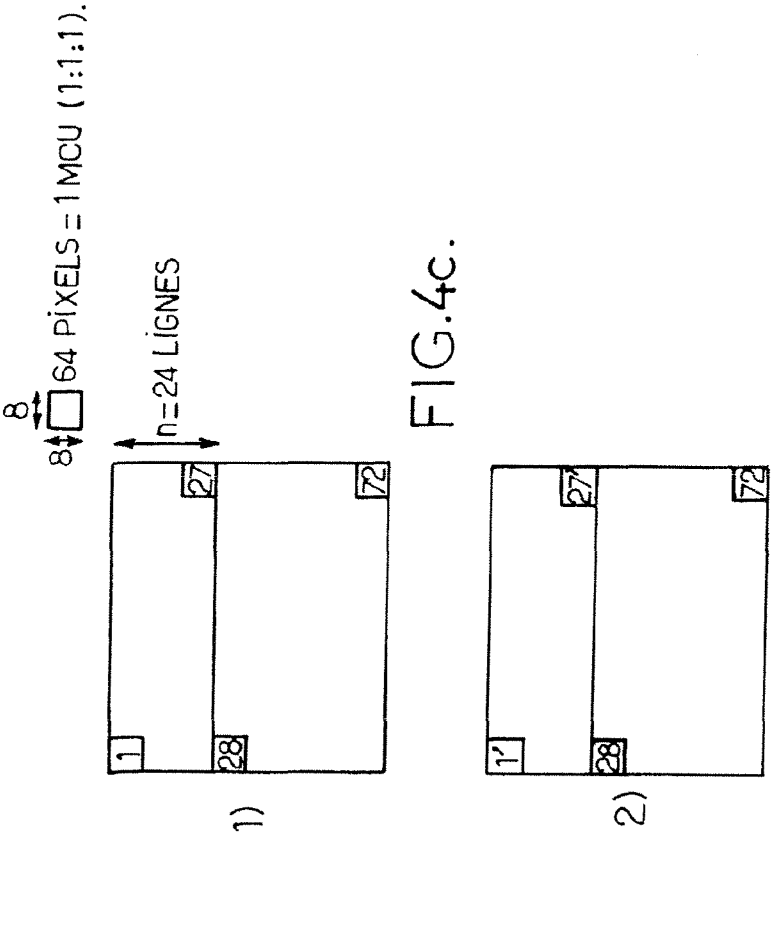


FIG.4c.

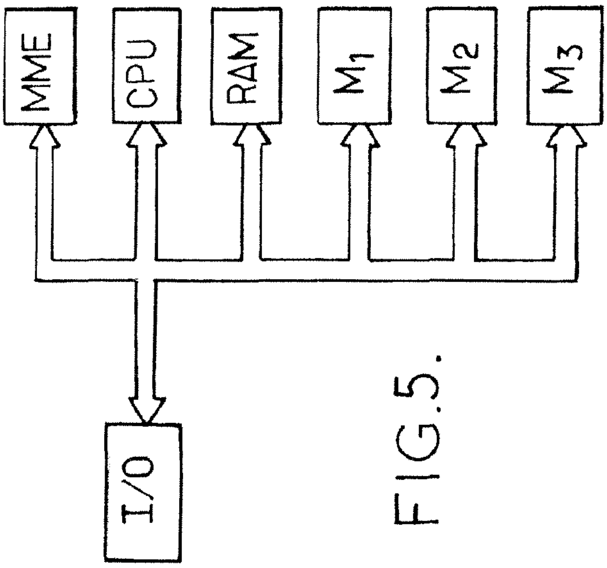


FIG.5.

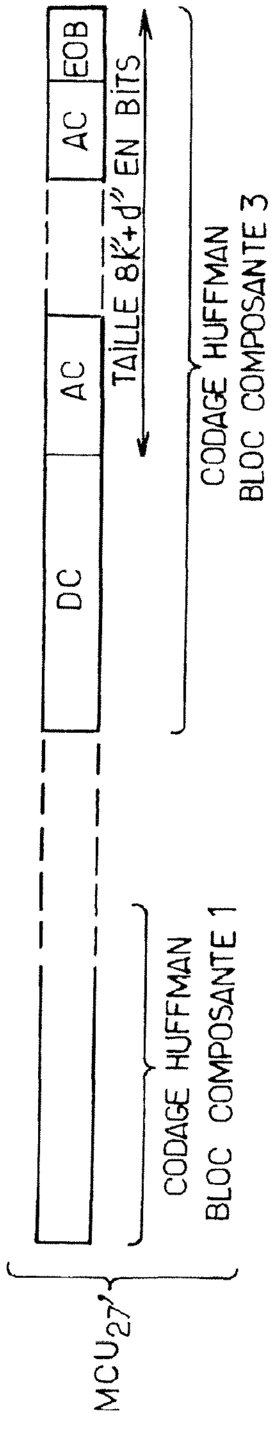


FIG.4b.

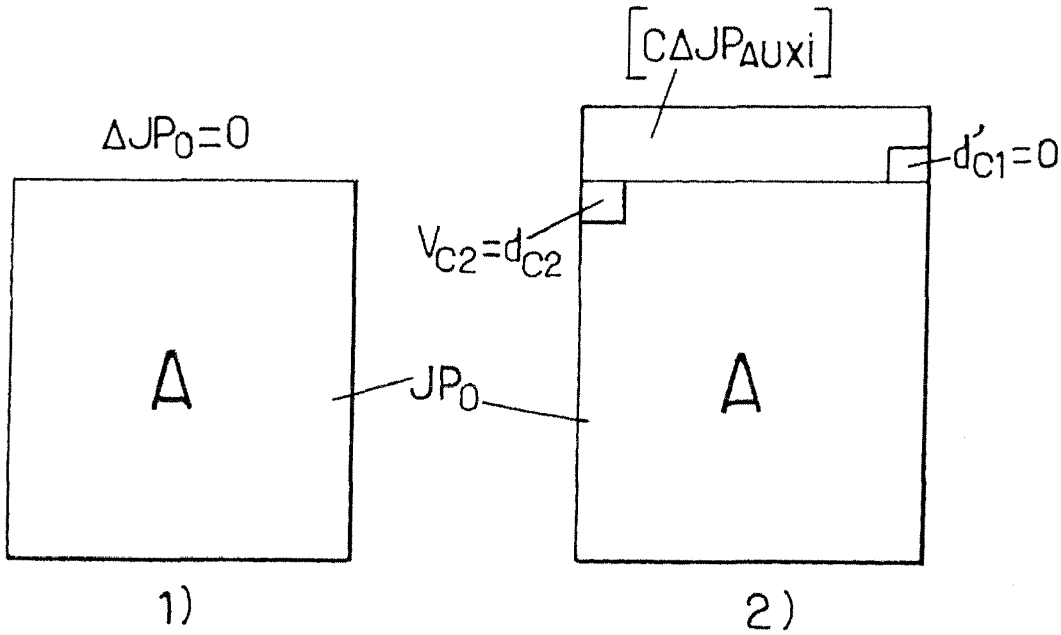


FIG.4d.

Office européen des brevets

# RAPPORT DE RECHERCHE EUROPEENNE

Numéro de la demande
EP 08 10 3497

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 327 248 A (MILLER ROBERT F [US] ET AL) 5 juillet 1994 (1994-07-05) | 1-6,8-14 | INV. H04N7/30 |
| Y | * figure 2 * | 7 | |
| | * revendication 1 * | | |
| | * colonne 2, ligne 64 - colonne 3, ligne 54 * | | |
| | * colonne 5, ligne 55-65 * | | |
| | ----- | | |
| X | US 2004/135906 A1 (OKADA SADAMI [JP]) 15 juillet 2004 (2004-07-15) | 1 | |
| A | * figure 3a * | 2-14 | |
| | * revendication 1 * | | |
| | * alinéas [0038] - [0071] * | | |
| | ----- | | |
| Y | US 2002/051140 A1 (YAMADA HIDEAKI [JP]) 2 mai 2002 (2002-05-02) | 7 | |
| A | * figures 9,10 * | 1-6,8-14 | |
| | * abrégé * | | |
| | ----- | | |

| DOMAINES TECHNIQUES RECHERCHES (IPC) |
|---|
| H04N |
| G06T |

Le présent rapport a été établi pour toutes les revendications

| Lieu de la recherche | Date d'achèvement de la recherche | Examinateur |
|---|---|---|
| La Haye | 12 août 2008 | Di Cagno, Gianluca |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 08 10 3497

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-08-2008

| Document brevet cité au rapport de recherche | Date de publication | Membre(s) de la famille de brevet(s) | Date de publication |
|---|---|---|---|
| US 5327248 A | 05-07-1994 | DE 4309105 A1 | 30-09-1993 |
| | | JP 3251084 B2 | 28-01-2002 |
| | | JP 6046243 A | 18-02-1994 |
| US 2004135906 A1 | 15-07-2004 | JP 3687675 B2 | 24-08-2005 |
| | | JP 2004222253 A | 05-08-2004 |
| US 2002051140 A1 | 02-05-2002 | JP 3614358 B2 | 26-01-2005 |
| | | JP 2002112001 A | 12-04-2002 |

EPO FORM P0460

Pour tout renseignement concernant cette annexe : voir Journal Officiel de l'Office européen des brevets, No.12/82